# EUROPÄISCHE PATENTSCHRIFT

(11) **EP 1 918 252 B1**
(45) Veröffentlichungstag und Bekanntmachung des Hinweises auf die Patenterteilung: **17.07.2013**
(21) Anmeldenummer: 07118200.0
(22) Anmeldetag: 10.10.2007
(51) Int. Cl.: C02F 1/42, C02F 1/00, B01J 47/02

(54) **Wasseraufbereitungskartusche**
Water purification cartridge
Cartouche de préparation d'eau

(30) Priorität: 13.10.2006 DE 102006049084
(43) Veröffentlichungstag der Anmeldung: 07.05.2008
(73) Patentinhaber: BWT AKTIENGESELLSCHAFT, 5310 Mondsee (AT)
(72) Erfinder: Johann, Jürgen, Dr., 69226 Nußloch (DE); Bissen, Monique, Dr., 5310 Mondsee (AT); Neubacher, Werner, 4880 St. Georgen im Attergau (AT); Schrotshammer, Christian, 5310 Mondsee (AT)
(74) Vertreter: Pfiz, Thomas

(56) Entgegenhaltungen:
- AT-B- 307 333
- US-A- 4 253 954
- US-A- 5 277 802
- US-A- 6 004 458

## Beschreibung

Die Erfindung betrifft eine Wasseraufbereitungskartusche, mit einem Gehäuse, das einen lonenaustauscher umschließt und sich über ein Schraubgewinde an einer Kartuschenanschlussarmatur anschrauben lässt, die einen mit Rohwasser, insbesondere aus einem Wasserversorgungsnetz, beaufschlagbaren Wassereinlass und einen mit einem Verbraucher, insbesondere einer Getränkemaschine, verbundenen oder verbindbaren Wasserauslass aufweist.

Wasseraufbereitungskartuschen der eingangs genannten Art sind beispielsweise aus der DE 38 26 857 A1 bekannt und werden unter anderem in Restaurants oder Cafés zur Aufbereitung von Rohwasser für Getränkemaschinen, wie Kaffeemaschinen, eingesetzt, wenn das zumeist aus einem öffentlichen Wasserversorgungsnetz stammende Rohwasser nicht die Anforderungen erfüllt, die vom Betreiber an die geschmackliche oder sonstige Qualität des Wassers bzw. von der Getränkemaschine an dessen Reinheit gestellt werden.

Da in den Wasseraufbereitungskartuschen je nach Einsatzzweck, wie Teilentsalzung zum Entfernen von Calcium und Magnesium aus dem Rohwasser, Vollentsalzung zum Entfernen sämtlicher Ionen des Rohwassers, Enthärtung zur Verminderung des Gehalts an Härtebildnern oder Nitratentfernung aus gesundheitlichen Gründen, unterschiedliche lonenaustauscher enthalten sind, die im Falle einer Verwechslung der Kartuschen unter anderem zu einer Beeinträchtigung des Geschmacks der zubereiteten Getränke oder des Betriebs der Getränkemaschine, zum Beispiel durch Kalk- oder Kesselsteinablagerungen, führen können, sollten derartige Verwechslungen nach Möglichkeit ausgeschlossen werden können, was allein durch eine entsprechende Beschriftung der Kartuschen nicht gewährleistet werden kann. Grundsätzlich wäre es zwar möglich, die Wasseraufbereitungskartuschen in Abhängigkeit vom jeweiligen Inhalt und Einsatzzweck mit unterschiedlich dimensionierten Schraubgewinden zu versehen, jedoch macht es dies erforderlich, für jede Art von Wasseraufbereitungskartusche eine zugehörige Kartuschenanschlussarmatur mit einem komplementären Gewinde herzustellen. Dies verursacht nicht nur einen relativ hohen Aufwand im Hinblick auf Konstruktion, Fertigung und Lagerhaltung, sondern lässt es im Falle eines Austauschs der Getränkemaschine auch nicht zu, die Kartuschenanschlussarmatur wieder für eine andere Wasseraufbereitungskartusche umzurüsten.

Ausgehend hiervon liegt der Erfindung die Aufgabe zugrunde, eine Wasseraufbereitungskartusche der eingangs genannten Art dahingehend zu verbessern, dass sie sich nur an einer bestimmten Kartuschenanschlussarmatur anschrauben lässt, die für diese Art von Wasseraufbereitungskartusche vorgesehen ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Erfindungsgemäß sind das Gehäuse und die Kartuschenanschlussarmatur jeweils mit mehreren ringförmigen, konzentrisch zur Gewindeachse des Schraubgewindes angeordneten Kodierrippen versehen, die beim Anschrauben des Gehäuses an der Kartuschenanschlussarmatur ineinander greifen.

Die erfindungsgemäße Lösung stellt sicher, dass die Anbringung einer "falschen" Wasseraufbereitungskartusche an einer nicht dafür bestimmten Kartuschenanschlussarmatur sicher verhindert werden kann. So passen zum Beispiel die Kodierrippen einer zur Teilentsalzung des Rohwassers dienenden, mit einem schwach sauren lonenaustauscher gefüllten Wasseraufbereitungskartusche zu den Kodierrippen einer Kartuschenanschlussarmatur, die zur Aufnahme einer solchen Wasseraufbereitungskartusche bestimmt ist, nicht jedoch zu den Kodierrippen von anderen Kartuschenanschlussarmaturen, die zur Aufnahme einer mit einem stark sauren Kationenaustauscher, einem Mischbettionenaustauscher oder einem stark basischen lonenaustauscher gefüllten Wasseraufbereitungskartusche bestimmt sind.

Eine bevorzugte Ausgestaltung der Erfindung sieht vor, dass eine Veränderung der Kodierung durch Veränderung der aufeinander abgestimmten Konfigurationen der gehäuseseitigen und armaturseitigen Kodierrippen dadurch erfolgt, dass auf der Seite der Kartuschenanschlussarmatur ein Kodierring zum Beispiel mittels einer Klemm-, Kleb- oder Rastverbindung unverlierbar in eine Ringnut zwischen mindestens zwei benachbarten Kodierrippen eingesetzt wird und gleichzeitig bei den zur Aufnahme in der Kartuschenanschlussarmatur bestimmten Wasseraufbereitungskartuschen diejenige Kodierrippe entfernt wird, die dem mindestens einen in die Ringnut eingesetzten Kodierring gegenüberliegt. Natürlich ist es zu demselben Zweck auch möglich, eine oder mehrere Kodierrippen der Kartuschenanschlussarmatur zu entfernen und an der jeweils gegenüberliegenden Stelle der Wasseraufbereitungskartusche einen Kodierring in die Ringnut zwischen den benachbarten Kodierrippen einzusetzen.

Vorzugsweise erhalten unterschiedlich befüllte und/oder für unterschiedliche Verbraucher, insbesondere Getränkemaschinen, bestimmte Wasseraufbereitungskartuschen jeweils eine andere Kodierung, d.h. eine andere Konfiguration der Kodierrippen, so dass nur die für den jeweiligen Verbraucher bestimmte Wasseraufbereitungskartusche in eine entsprechend kodierte Kartuschenanschlussarmatur in der zum Verbraucher führenden Wasserleitung passt.

Vor dem Entfernen von einer oder mehrerer Kodierrippen an der Wasseraufbereitungskartusche oder an der Kartuschenanschlussarmatur ist die Anzahl der Kodierrippen der Wasseraufbereitungskartusche vorzugsweise gleich oder um eins größer oder kleiner als die Anzahl der Kodierrippen der Kartuschenanschlussarmatur, so dass abgesehen von einer radial innersten und einer radial äußersten Kodierrippe alle Kodierrippen der Wasseraufbereitungskartusche und der Kartuschenanschlussarmatur in eine Ringnut zwischen zwei benachbarten gegenüberliegenden Kodierrippen eingreifen. Auf diese Weise kann das Verhältnis der Anzahl der möglichen Kodierungen und der Gesamtzahl der benötigten Kodierrippen maximiert und damit der Platzbedarf für eine vorgegebene Anzahl von benötigten Kodierungen minimiert werden.

Eine bevorzugte Ausgestaltung der Erfindung sieht vor, dass die Kodierrippen der Wasseraufbereitungskartusche axial über ein mit einem Außengewinde versehenes Stirnende des Gehäuses überstehen, das in ein Innengewinde einer Gewindebuchse der Kartuschenanschlussarmatur eingeschraubt wird, über deren Boden die Kodierrippen der Kartuschenanschlussarmatur überstehen.

Zweckmäßig weist das Gehäuse an seinem mit der Gewindebuchse in Eingriff tretenden Stirnende auch einen Anschlussstutzen zur Zufuhr des Rohwassers in das Gehäuse der Wasseraufbereitungskartusche auf, der vorzugsweise koaxial zum Schraubgewinde und koaxial zu den über das Stirnende überstehenden Kodierrippen angeordnet ist.

Um zu vermeiden, dass sich das Außen- bzw. Innengewinde einer "falschen" Wasseraufbereitungskartusche teilweise mit dem zugehörigen Innen- bzw. Außengewinde der Kartuschenanschlussarmatur in Eingriff bringen lässt, bevor sich der Benutzer der Inkompatibilität der Wasseraufbereitungskartusche und der Kartuschenanschlussarmatur bewusst wird, sieht eine weitere vorteilhafte Ausgestaltung der Erfindung vor, dass die Scheitel der Kodierrippen ineinander greifen, bevor es zu einem Eingriff der beiden Gewinde kommt. Um dies zu erreichen, ist zweckmäßig die Überstandshöhe der jeweiligen Kodierrippen größer als die Eingriffslänge des Schraubgewindes.

Um das Einführen der gehäuseseitigen Kodierrippen in die Ringnuten zwischen den Kodierrippen der Kartuschenanschlussarmatur zu erleichtern, können sich die Kodierrippen zu ihren Scheiteln hin leicht verjüngen und/oder im Bereich der Scheitel mit Fasen versehen sein, die zu den benachbarten Nuten hin abfallen.

Im Folgenden wird die Erfindung anhand eines in der Zeichnung schematisch dargestellten Ausführungsbeispiels näher erläutert. Es zeigen
Fig. 1: einen Längsschnitt durch eine erfindungsgemäße Wasseraufbereitungskartusche nach der Montage an einer Kartuschenanschlussarmatur;
Fig. 2: eine schematische perspektivische Unterseitenansicht der Kartuschenanschlussarmatur;
Fig. 3: eine schematische perspektivische Ansicht des oberen Teils der Wasseraufbereitungskartusche;
Fig. 4: eine vergrößerte Darstellung des Ausschnitts IV aus Fig. 1;
Fig. 5: eine Ansicht entsprechend Fig. 4, jedoch von einer Kartuschenanschlussarmatur und einer Wasseraufbereitungskartusche mit veränderter Kodierung.

Die in der Zeichnung dargestellte Wasseraufbereitungskartusche 2 dient zur Aufbereitung von Rohwasser, zum Beispiel aus einem Wasserversorgungsnetz, das vor seiner Zufuhr in eine Getränkemaschine (nicht dargestellt) aufbereitet werden soll, zum Beispiel um den Geschmack der in der Getränkemaschine zubereiteten Getränke zu verbessern, eine Ablagerung von schwerlöslichen Bestandteilen des Rohwassers in der Getränkemaschine zu verhindern und/oder gesundheitlich bedenkliche Inhaltsstoffe, wie Nitrate, aus dem Rohwasser zu entfernen.

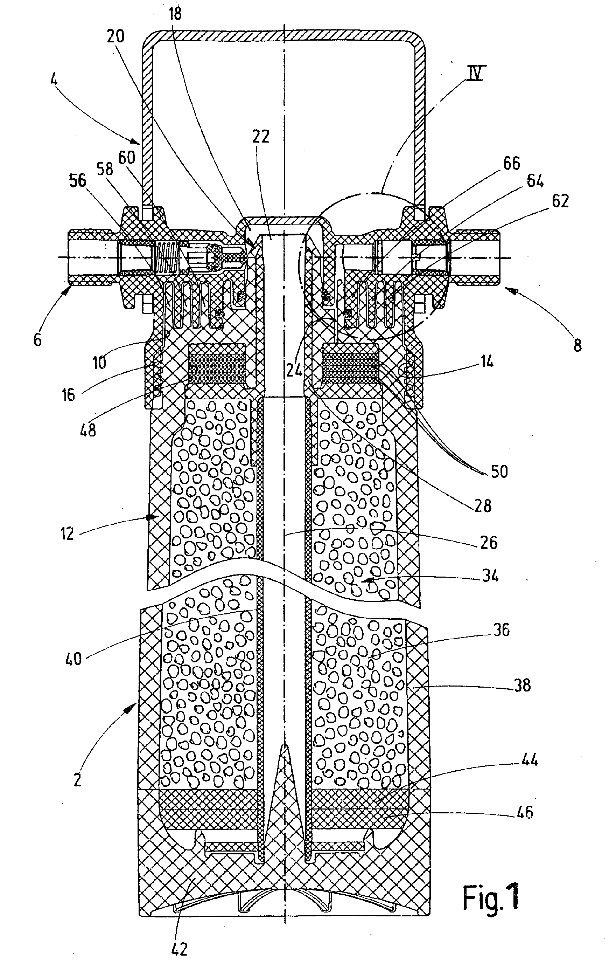

Die Wasseraufbereitungskartusche 2 lässt sich austauschbar an einer Kartuschenanschlussarmatur 4 anbringen, die zum Beispiel hinter einem Hausanschluss des Wasserversorgungsnetzes in ein zur Getränkemaschine führendes Wasserrohr (nicht dargestellt) eingesetzt werden kann und einen auf der Seite des Wasserversorgungsnetzes mit dem Wasserrohr verbindbaren Rohwassereinlassanschluss 6 und einen auf der Seite der Getränkemaschine mit dem Wasserohr verbindbaren Reinwasserauslassanschluss 8 umfasst. Die Kartuschenanschlussarmatur 4 weist eine nach unten offene Gewindebuchse 10 für die Wasseraufbereitungskartusche 2 auf, deren Gehäuse 12 in der Nähe seines oberen Stirnendes mit einem zu einem Innengewinde 14 der Gewindebuchse 10 komplementären Außengewinde 16 versehen ist, so dass die Wasseraufbereitungskartusche 2 mit ihrem oberen Stirnende von unten her in die Kartuschenanschlussarmatur 4 eingeschraubt werden kann, wie in Fig. 1 dargestellt.

Die Gewindebuchse 10 weist in ihrer Mitte eine nach unten offene Aufnahmebuchse 18 auf, in die ein nach oben über das Stirnende des Gehäuses 12 überstehender zylindrischer und am oberen Ende konisch verjüngter Anschlussstutzen 20 der Wasseraufbereitungskartusche 2 dichtend eingeführt wird. Nach dem Einschrauben der Wasseraufbereitungskartusche 2 in die Gewindebuchse 10 tritt das Rohwasser aus dem Rohwassereinlassanschluss 6 durch die Aufnahmebuchse 18 in eine am oberen Ende des Anschlussstutzens 20 mündende Einlassöffnung 22 eines im Inneren des Anschlussstutzens 20 nach unten verlaufenden, zu einer Längs- oder Mittelachse 26 der Wasseraufbereitungskartusche 2 koaxialen Einlassrohrs 28 ein, während das aufbereitete Wasser nach dem Hindurchtritt durch die Wasseraufbereitungskartusche 2 getrennt vom zuströmenden Rohwasser durch einen seitlich versetzten Auslasskanal 24 in den Reinwasserauslassanschluss 8 geleitet wird.

Je nach Art der Getränkemaschine und der Qualität des Rohwassers soll die Aufbereitung des Rohwassers in der Wasseraufbereitungskartusche 2 entweder in Form einer Teilentsalzung, einer Enthärtung oder einer Vollentsalzung des Rohwassers oder in Form einer Entfernung von Nitrat aus dem Rohwasser erfolgen.

Zu diesem Zweck umschließt das aus Kunststoff hergestellte Gehäuse 12 der Wasseraufbereitungskartusche 2 einen vom Rohwasser durchströmten lonenaustauscher 34, dessen Materialzusammensetzung von der Art der gewünschten Wasseraufbereitung abhängt. Während bei der Teilentsalzung in einem lonenaustauscher 34 mit einem schwach sauren lonenaustauschermaterial, zum Beispiel Lewatit S8229 der Firma Lanxess, im Rohwasser enthaltene Calcium- und Magnesium-lonen im lonenaustauschermaterial zurückgehalten und durch Wasserstoff-Ionen aus dem lonenaustauschermaterial ersetzt werden, werden bei der Enthärtung mittels eines lonenaustauschers 34 mit einem stark sauren Kationenaustauschermaterial, zum Beispiel SRL1 der Firma Rohm und Haas, die im Rohwasser enthaltenen Härtebildner Calcium und Magnesium gegen Natrium aus dem Kationenaustauschermaterial ausgetauscht. Bei der Vollentsalzung werden hingegen sämtliche Ionen des Rohwassers mittels eines Mischbettionenaustauschers 34 entfernt, der sowohl ein stark saures Kationenaustauschermaterial und ein stark basisches Anionenaustauschermaterial enthält. Zum Beispiel kann ein Mischbettionenaustauscher vom Typ MB 50 der Firma DOW verwendet werden, um im Rohwasser enthaltene Natrium-, Calcium- und Magnesium-Kationen im Kationenaustauschermaterial gegen Wasserstoff-Ionen und im Rohwasser enthaltene Hydrogencarbonat-, Chlorid-, Sulfat- und Nitrat-Anionen im Anionenaustauschermaterial gegen Hydroxyl-lonen auszutauschen, die mit den Wasserstoff-Ionen zu Wasser rekombinieren. Bei der Nitratentfernung werden die Nitrat-Ionen im Rohwasser mittels eines Anionenaustauschers mit einem stark basischen Anionenaustauschermaterial, zum Beispiel vom Typ IMAC HP555, durch Chlorid-lonen ersetzt.

Das Austauschermaterial des lonenaustauschers 34 ist in Form einer Granulatschüttung in einen Ringraum 36 zwischen einer äußeren Umfangswand 38 des Gehäuses 12 und einem Fallrohr 40 eingefüllt, das sich entlang der Längs- oder Mittelachse 26 des Gehäuses bis in die Nähe von dessen geschlossenem unterem Stirnende 42 erstreckt und dessen oberes Stirnende dicht mit dem Einlassrohr 28 verbunden ist. Durch das Fallrohr 40 wird das aus dem Rohwassereinlassanschluss 6 in das Einlassrohr 28 zugeführte Rohwasser entlang der Längs- oder Mittelachse 26 der Wasseraufbereitungskartusche 2 nach unten geleitet, wo es nach seinem Austritt aus dem Fallrohr 40 und vor seinem Eintritt in den lonenaustauscher 34 durch zwei die Granulatschüttung tragende Feinsiebe 44, 46 hindurchtritt, in denen partikelförmige Verunreinigungen aus dem Rohwasser herausgefiltert werden.

Das vorgefilterte Rohwasser steigt anschließend durch den Ringraum 36 mit dem lonenaustauscher 34 nach oben, wobei in Abhängigkeit vom verwendeten lonenaustauschermaterial alle oder ein Teil der im Rohwasser enthaltenen lonen entfernt bzw. gegen andere lonen ausgetauscht werden, wie zuvor ausgeführt. In einer oberhalb der Granulatschüttung angeordneten, mit dem Ringraum 36 durch Verbindungskanäle (nicht sichtbar) kommunizierenden Kammer 48 befindet sich ein weiteres Filterpaket 50 aus hintereinander im Strömungspfad des aufbereiteten Wassers angeordneten Filtern, zum Beispiel einem Aktivkohlefilter und einem weiteren Feinfilter, von denen der erstere aus einem Vlies oder Gewebe aus Aktivkohlefasern besteht und Geruchs- und Geschmacksstoffe sowie von oxidierend wirkende Chemikalien aus dem Wasser entfernt, während der letztere eventuell in der Kartusche 2 selbst in das Wasser gelangte Schwebstoffe und Partikel zurückhalten soll. Nach dem Hindurchtritt durch das Filterpaket 50 strömt das aufbereitete und gefilterte Wasser durch den Auslasskanal 24 in den Reinwasserauslassanschluss 8, von wo es zur Getränkemaschine geleitet wird.

Um es einerseits zu ermöglichen, zur Kostenreduzierung für alle Arten von Wasseraufbereitung im Wesentlichen identisch aufgebaute Wasseraufbereitungskartuschen 2 zu verwenden, in denen in Abhängigkeit von der Art der gewünschten Wasseraufbereitung jeweils nur ein anderer lonenaustauscher 34 enthalten ist, andererseits jedoch sicher zu verhindern, dass versehentlich an einer Kartuschenanschlussarmatur 4 eine Wasseraufbereitungskartusche 2 angebracht wird, die einen "falschen", für die an den Reinwasserauslassanschluss angeschlossene Getränkemaschine ungeeigneten lonenaustauscher 34 enthält, sind die Wasseraufbereitungskartusche 2 und die Kartuschenanschlussarmatur 4 mit komplementären Kodierrippen 56, 58, 60 bzw. versehen, die nur eine Montage einer mit dem gewünschten lonenaustauscher 34 gefüllten Wasseraufbereitungskartusche 2 an der zugehörigen Kartuschenanschlussarmatur 4 zulassen.

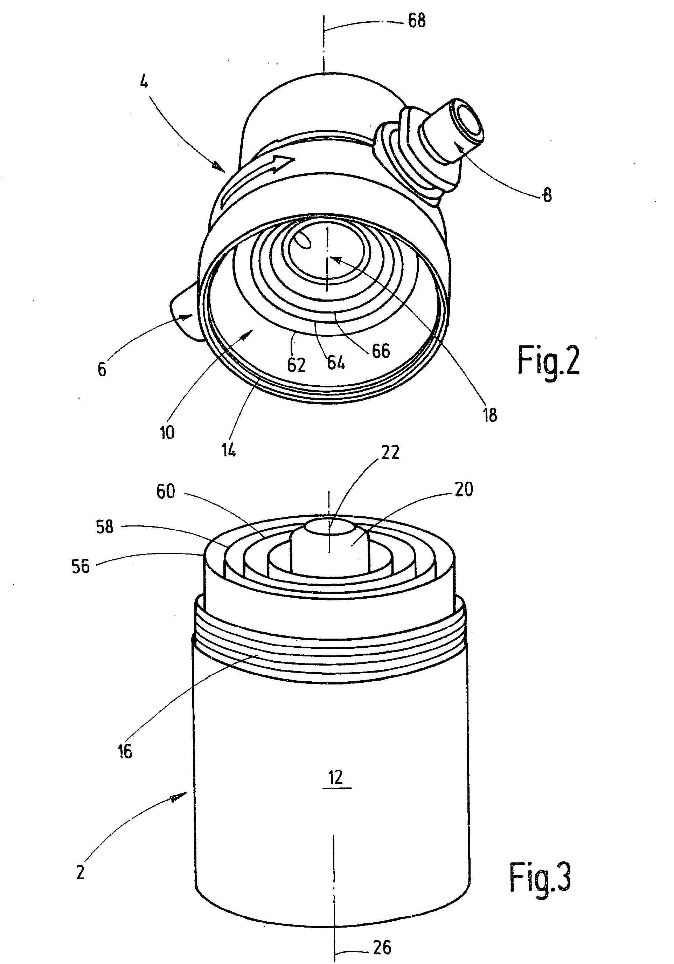

Wie am besten in Fig. 1 und 3 dargestellt, sind die Kodierrippen 56, 58, 60 der Wasseraufbereitungskartusche 2 so ausgebildet, dass sie die von der Längs- oder Mittelachse 26 gebildete Gewindeachse des Außengewindes 16 im radialen Abstand voneinander ringförmig umgeben und koaxial zu dieser Achse 26 ausgerichtet sind. Entsprechend sind die koaxialen Kodierrippen 62, 64, 66 der Kartuschenanschlussarmatur 4 im radialen Abstand voneinander ringförmig um eine Gewindeachse 68 des Innengewindes 14 der Gewindebuchse 14 herum angeordnet, die nach dem Festschrauben der Kartusche 2 mit deren Längs- oder Mittelachse 26 bzw. der Gewindeachse des Außengewindes 16 fluchtet. Dabei stehen die Kodierrippen 56, 58, 60 der Wasseraufbereitungskartusche 2 über eine den Anschlussstutzen 20 umgebende Stirnseite des Gehäuses 12 über, während die Kodierrippen 62, 64, 66 der Kartuschenanschlussarmatur 4 über den gegenüberliegenden Boden der Gewindebuchse 10 überstehen. Der Abstand der gehäuseseitigen Kodierrippen 56, 58, 60 von der Gewindeachse des Außengewindes 16 ist so an den Abstand der armaturseitigen Kodierrippen 62, 64, 66 von der Gewindeachse des Innengewindes 14 angepasst, dass die Kodierrippen 56, 58, 60 bzw. 62, 64, 66 kammartig ineinander greifen, wenn die Wasseraufbereitungskartusche 2 mit dem Anschlussstutzen 20 voran in die Gewindebuchse 10 der Kartuschenanschlussarmatur 4 eingeführt und beim Eintritt des Anschlussstutzens 20 in die Aufnahmebuchse 18 in Bezug zur Kartuschenanschlussarmatur 4 ausgerichtet wird. Mit anderen Worten sind die gehäuseseitigen Kodierrippen 56, 58, 60 gegenüber den armaturseitigen Kodierrippen 62, 64, 66 radial versetzt angeordnet, so dass sie jeweils in eine Ringnut zwischen zwei benachbarten armaturseitigen Kodierrippen 56, 58, 60 eingreifen, und umgekehrt.

Die Überstandshöhe der Kodierrippen 56, 58, 60 und 62, 64, 66 über die Stirnseite des Gehäuses 4 bzw. über den Boden der Gewindebuchse 10 ist größer als die radiale Wandstärke der Kodierrippen 56, 58, 60 bzw. 62, 64, 66 und vorzugsweise auch größer als die Eingriffslänge der beiden Gewinde 16, 14, so dass die Scheitel der Kodierrippen 56, 58, 60 bzw. 62, 64, 66 bereits ineinander greifen, bevor die beiden Gewinde 16, 14 miteinander in Eingriff treten.

Um das Einführen der gehäuseseitigen Kodierrippen 56, 58, 60 in die Ringnuten zwischen den Kodierrippen 62, 64, 66 der Kartuschenanschlussarmatur 4 zu erleichtern, sind die Kodierrippen 56, 58, 60 bzw. 62, 64, 66 von ihrem Fuß bis zu ihrem Scheitel leicht verjüngt und zudem im Bereich der Scheitel mit Fasen versehen, die zu den benachbarten Ringnuten hin abfallen.

Bei dem in Fig. 1 bis 4 dargestellten Ausführungsbeispiel einer Kartuschenanschlussarmatur 4 und einer zum Einsatz mit dieser Armatur 4 bestimmten Wasseraufbereitungskartusche 2 sind sämtliche gehäuseseitigen Kodierrippen 56, 58, 60 und sämtliche armaturseitigen Kodierrippen 62, 64, 66 in jeweils etwa gleichen Abständen voneinander angeordnet.

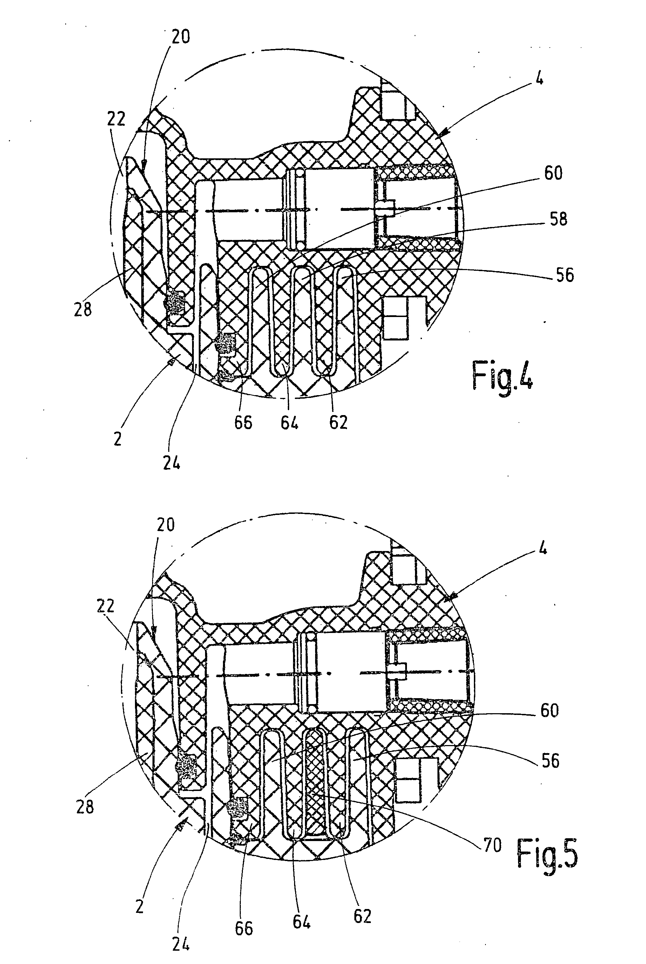

Bei dem in Fig. 5 dargestellten Ausführungsbeispiel einer Kartuschenanschlussarmatur 4 und einer zum Einsatz mit dieser Armatur 4 bestimmten, jedoch mit einem anderen lonenaustauscher 34 gefüllten Wasseraufbereitungskartusche 2 umfasst die Kartuschenanschlussarmatur 4 zusätzlich einen fest zwischen die zwei benachbarten Kodierrippen 62 und 64 eingesetzten Kodierring 70, während bei der zugehörigen Wasseraufbereitungskartusche 2 an der entsprechenden Stelle die Kodierrippe 58 fehlt. Diese Umkodierung bewirkt, dass weder die in Fig. 1 bis 4 dargestellte Wasseraufbereitungskartusche 2 in die in Fig. 5 dargestellte Kartuschenanschlussarmatur 4 noch die in Fig. 5 dargestellte Wasseraufbereitungskartusche 2 in die in Fig. 1 bis 4 dargestellte Kartuschenanschlussarmatur 4 passt, so dass eine versehentliche Bestückung der Kartuschenanschlussarmaturen 4 mit einer "falschen" Wasseraufbereitungskartusche 2 ausgeschlossen werden kann.

Um die Umkodierung vorzunehmen, kann der Kodierring 70 auf der Seite der Kartuschenanschlussarmatur 4 unverlierbar zwischen die benachbarten Kodierrippen 62, 64 eingeklemmt, eingepresst, eingeklebt oder eingerastet werden, während die fehlende Kodierrippe 58 auf der Seite des Gehäuses 4 der Wasseraufbereitungskartusche 2 zum Beispiel dadurch erzeugt werden kann, dass beim Spritzgießen des Gehäuses an dieser Stelle ein entsprechender ringförmiger Formkörper zwischen zwei benachbarte, in den Formhohlraum der Spritzgussform ragende Stege eingesetzt wird, welche beim Spritzgießen die Ringnuten zwischen den Kodierrippen 56 und 60 bilden. Alternativ kann die Kodierrippe 58 auch jedoch auch nachträglich herausgefräst werden.

Bei einer Ausgangszahl von drei gehäuseseitigen und drei armaturseitigen Kodierrippen 56, 58, 60 bzw. 62, 64, 66 sind durch Einsetzen von einem oder zwei Kodierringen 70 in die Ringnuten zwischen den Kodierrippen 62, 64, 66 im Boden der Gewindebuchse 10 und durch entsprechendes Entfernen von einer oder zwei Kodierrippen 56, 58, 60 an der Stirnseite des Gehäuses 4 insgesamt sieben verschiedene Kodierungen möglich, so dass neben den zuvor genannten möglichen Arten der Wasseraufbereitung, nämlich Teilentsalzung, Enthärtung, Vollentsalzung und Nitratentfernung zum Beispiel auch noch drei verschiedenen Arten der Filtrierung des Rohwassers in der Wasseraufbereitungskartusche oder drei verschiedenen Typen von Getränkemaschinen mit unterschiedlichen Anforderungen Rechnung getragen werden könnte.

Die Anzahl der möglichen unterschiedlichen Kodierungen kann verdoppelt werden, wenn als zusätzliche Variante zur Umkodierung am Boden der Gewindebuchse 10 der Kartuschenanschlussarmatur 4 eine oder zwei Kodierrippen 62, 64, 66 entfernt und entsprechend am Stirnende des Gehäuses 4 der Wasseraufbereitungskartusche 2 ein oder zwei Kodierringe 70 in die Ringnuten zwischen den Kodierrippen 56, 58, 60 eingesetzt werden dürfen.

Die Kodierung kann grundsätzlich auch Verwendung finden, um ein Einschrauben von Nachahmerkartuschen unbekannten Ursprungs in die Kartuschenanschlussarmatur zu verhindern.

Die Kartuschenanschlussarmatur braucht keine separate Armatur zu sein, sondern könnte auch eine in eine Getränkemaschine integrierte Armatur sein.

## Patentansprüche

1. Wasseraufbereitungskartusche, mit einem Gehäuse, das einen lonenaustauscher umschließt und sich über ein Schraubgewinde an einer Kartuschenanschlussarmatur anschrauben lässt, die einen mit Rohwasser, insbesondere aus einem Wasserversorgungsnetz, beaufschlagbaren Wassereinlass und einen mit einem Verbraucher, insbesondere einer Getränkemaschine verbundenen oder verbindbaren Wasserauslass aufweist, **dadurch gekennzeichnet, dass** die Kartuschenanschlussarmatur (4) eine Gewindebuchse (10) mit einem Innengewinde (14) aufweist, dass das Gehäuse (12) mit einem mit dem Innengewinde (14) komplementären Außengewinde (16) versehen ist, und dass das Gehäuse (12) und die Kartuschenanschlussarmatur (4) jeweils mit mehreren ringförmigen, konzentrisch zur Gewindeachse (26, 68) des Schraubgewindes (16, 14) angeordneten Kodierrippen (56, 58, 60 bzw. 62, 64, 66) versehen sind, die beim Anschrauben des Gehäuses (12) an der Kartuschenanschlussarmatur (4) ineinander greifen.

2. Wasseraufbereitungskartusche nach Anspruch 1, **dadurch gekennzeichnet, dass** zwischen mindestens zwei benachbarten Kodierrippen ein Kodierring eingesetzt ist.

3. Wasseraufbereitungskartusche nach Anspruch 2, **dadurch gekennzeichnet, dass** der Kodierring durch eine Klemm-, Kleb- oder Rastverbindung unverlierbar gehalten ist.

4. Wasseraufbereitungskartusche nach einem der Ansprüche 1 bis 3, **dadurch gekennzeichnet, dass** die Anzahl der Kodierrippen (56, 58, 60) des Gehäuses n und die Anzahl der Kodierrippen (62, 64, 66) der Kartuschenanschlussarmatur (4) n, n-1 oder n+1 beträgt, wobei n eine ganze natürliche Zahl > 1 ist.

5. Wasseraufbereitungskartusche nach einem der Ansprüche 1 bis 4, **dadurch gekennzeichnet, dass** die Anzahl der Kodierrippen (56, 58, 60) für unterschiedlich befüllte Wasseraufbereitungskartuschen (2) und/oder für unterschiedliche Verbraucher unterschiedlich ist.

6. Wasseraufbereitungskartusche nach einem der Ansprüche 1 bis 5, **dadurch gekennzeichnet, dass** eine Veränderung der Anzahl der Kodierrippen (56, 58, 60 bzw. 62, 64, 66) durch Einsetzen mindestens eines Kodierrings (70) zwischen zwei benachbarte Rippen (62, 64) oder durch Entfernen einer dem Kodierring (70) gegenüberliegenden Rippe (58) erfolgt.

7. Wasseraufbereitungskartusche nach einem der Ansprüche 1 bis 6, **dadurch gekennzeichnet, dass** die Kodierrippen (56, 58, 60) axial über ein Stirnende des Gehäuses (12) überstehen.

8. Wasseraufbereitungskartusche nach Anspruch 7, **dadurch gekennzeichnet, dass** die Überstandshöhe der Kodierrippen (56, 58, 60) größer als die Eingriffslänge des Schraubgewindes (14, 16) ist.

9. Wasseraufbereitungskartusche nach einem der Ansprüche 1 bis 8, **dadurch gekennzeichnet, dass** sämtliche Kodierrippen (56, 58, 60) etwa dieselbe mittlere Wandstärke aufweisen.

10. Wasseraufbereitungskartusche nach einem der Ansprüche 1 bis 9, **dadurch gekennzeichnet, dass** sich die Kodierrippen (56, 58, 60) zu ihrem Scheitel hin leicht verjüngen.

11. Wasseraufbereitungskartusche nach einem der Ansprüche 1 bis 10, **dadurch gekennzeichnet, dass** benachbarte Kodierrippen (56, 58, 60) durch Ringnuten getrennt sind.

12. Wasseraufbereitungskartusche nach einem der Ansprüche 1 bis 11, **dadurch gekennzeichnet, dass** die Kodierrippen (56, 58, 60) einen Anschlussstutzen (20) des Gehäuses (12) ringförmig umgeben.

13. Wasseraufbereitungskartusche nach Anspruch 12, **dadurch gekennzeichnet, dass** die Kodierrippen (56, 58, 60) koaxial zum Anschlussstutzen (20) ausgerichtet sind.

## Claims

1. Water-conditioning cartridge comprising a housing that encloses an ion exchanger and can be screwed via a screw thread onto a cartridge-connecting fitting, which is provided with a water inlet that for admission of untreated water, particularly from a water-supply system, and with a water outlet, which is connected or can be connected to a consuming component, in particular a beverage machine, **characterized in that** the cartridge-connecting fitting (4) has a threaded socket (10) including a female thread (14), that the housing (12) is provided with a male thread (16) that is complementary to the female thread (14), and that the housing (12) and the cartridge-connecting fitting (4) are each provided with a plurality of annular coding ribs (56, 58, 60 respectively 62, 64, 66), which are disposed concentrically relative to the thread axis (26, 68) of the screw thread (16, 14) and which engage with one another when the housing (12) is screwed onto the cartridge-connecting fitting (4).

2. Water-conditioning cartridge according to claim 1, **characterized in that** a coding ring inserted between at least two adjacent coding ribs.

3. Water-conditioning cartridge according to claim 2, **characterized in that** the coding ring is held captively by a clamped, adhesively bonded or latched connection.

4. Water-conditioning cartridge according to one of the claims 1 to 3, **characterized in that** n represents the number of the coding ribs (56, 58, 60) of the housing and n, n-1, or n + 1 represents the number of the coding ribs (62, 64, 66) of the cartridge-connecting fitting (4), where n is a whole natural number > 1.

5. Water-conditioning cartridge according to one of the claims 1 to 4, **characterized in that** a different number of coding ribs (56, 58, 60) is provided for differently packed water-conditioning cartridges (2) and/or for different consuming components.

6. Water-conditioning cartridge according to one of the claims 1 to 5, **characterized in that** a change in the number of coding ribs (56, 58, 60 respectively 62, 64, 66) is made by inserting at least one coding ring (70) between two adjacent ribs (62, 64) or by removing a rib (58) disposed opposite the coding ring (70).

7. Water-conditioning cartridge according to one of the claims 1 to 6, **characterized in that** the coding ribs (56, 58, 60) project axially beyond an axial end of the housing (12).

8. Water-conditioning cartridge according to claim 7, **characterized in that** the coding ribs (56, 58, 60) have a projecting height greater than an engagement length of the screw thread (14, 16).

9. Water-conditioning cartridge according to one of the claims 1 to 8, **characterized in that** all coding ribs (56, 58, 60) have approximately identical average wall thickness.

10. Water-conditioning cartridge according to one of the claims 1 to 9, **characterized in that** the coding ribs (56, 58, 60) are slightly tapered towards their apex.

11. Water-conditioning cartridge according to one of the claims 1 to 10, **characterized in that** adjacent coding ribs (56, 58, 60) are separated by annular grooves.

12. Water-conditioning cartridge according to one of the claims 1 to 11, **characterized in that** the coding ribs (56, 58, 60) annularly surround a connector piece (20) of the housing (12).

13. Water-conditioning cartridge according to claim 12, **characterized in that** the coding ribs (56, 58, 60) are oriented coaxially with the connector piece (20).

## Revendications

1. Cartouche de traitement d'eau dotée d'un boîtier qui entoure un échangeur d'ions et qui peut être vissé par l'intermédiaire d'un filet sur une armature de raccordement de cartouche qui présente une entrée d'eau qui peut recevoir de l'eau brute provenant en particulier d'un réseau de distribution d'eau et une sortie d'eau reliée ou apte à être reliée à un consommateur, en particulier à une machine de préparation de boissons,
**caractérisée en ce que**
l'armature (4) de raccordement de cartouche présente une douille filetée (10) dotée d'un filet intérieur (14),
**en ce que** le boîtier (12) est doté d'un filet extérieur (16) complémentaire du filet intérieur (14)
et
**en ce que** le boîtier (12) et l'armature (4) de raccordement de cartouche sont tous deux dotés de plusieurs nervures de codage (56, 58, 60, 62, 64, 66) de forme annulaire disposées concentriquement par rapport à l'axe (26, 68) du filet de vissage (16, 14) et qui s'engagent les unes dans les autres lorsque le boîtier (12) est vissé sur l'armature (4) de raccordement de cartouche.

2. Cartouche de traitement d'eau selon la revendication 1, **caractérisée en ce qu'**un anneau de codage est inséré entre au moins deux nervures de codage voisines.

3. Cartouche de traitement d'eau selon la revendication 2, **caractérisée en ce que** l'anneau de codage est maintenu par une liaison serrée, collée ou encliquetée.

4. Cartouche de traitement d'eau selon l'une des revendications 1 à 3, **caractérisée en ce que** le nombre des nervures de codage (56, 58, 60) du boîtier est n et le nombre des nervures de codage (62, 64; 66) de l'armature (4) de raccordement de cartouche est n, n-1 ou n+1, n étant un nombre entier naturel > 1.

5. Cartouche de traitement d'eau selon l'une des revendications 1 à 4, **caractérisée en ce que** le nombre des nervures de codage (56, 58, 60) varie en fonction des cartouches (2) de traitement d'eau remplies et/ou des différents consommateurs.

6. Cartouche de traitement d'eau selon l'une des revendications 1 à 5, **caractérisée en ce qu'**une modification du nombre des nervures de codage (56, 58, 60, 62, 64, 66) s'effectue en insérant au moins un anneau de codage (70) entre deux nervures (62, 64) voisines ou en enlevant une nervure (58) située face à l'anneau de codage (70).

7. Cartouche de traitement d'eau selon l'une des revendications 1 à 6, **caractérisée en ce que** les nervures de codage (56, 58, 60) débordent de l'extrémité frontale du boîtier (12).

8. Cartouche de traitement d'eau selon la revendication 7, **caractérisée en ce que** la hauteur de débord des nervures de codage (56, 58, 60) est supérieure à la longueur d'engagement du filet de vissage (14, 16).

9. Cartouche de traitement d'eau selon l'une des revendications 1 à 8, **caractérisée en ce que** les nervures de codage (56, 58, 60) présentent sensiblement la même épaisseur centrale.

10. Cartouche de traitement d'eau selon l'une des revendications 1 à 9, **caractérisée en ce que** les nervures de codage (56, 58, 60) se rétrécissent légèrement en direction de leur sommet.

11. Cartouche de traitement d'eau selon l'une des revendications 1 à 10, **caractérisée en ce que** les nervures de codage (56, 58, 60) voisines sont séparées par des rainures annulaires.

12. Cartouche de traitement d'eau selon l'une des revendications 1 à 11, **caractérisée en ce que** les nervures de codage (56, 58, 60) entourent en anneau une tubulure de raccordement (20) du boîtier (12).

13. Cartouche de traitement d'eau selon la revendication 12, **caractérisée en ce que** les nervures de codage (56, 58, 60) sont alignées coaxialement par rapport à la tubulure de raccordement (20).
